Europäisches Patentamt

European Patent Office

Office européen des brevets

(11) Numéro de publication: **0 296 894**
**A2**

(12) **DEMANDE DE BREVET EUROPEEN**

(21) Numéro de dépôt: 88400905.1

(22) Date de dépôt: 14.04.88

(51) Int. Cl.⁴: **G 01 V 5/00**
**G 01 V 5/10**

(30) Priorité: 14.04.87 FR 8705281

(43) Date de publication de la demande:
28.12.88 Bulletin 88/52

(84) Etats contractants désignés:
AT BE CH DE ES GB IT LI NL SE

(71) Demandeur: **COMPAGNIE GENERALE DES MATIERES NUCLEAIRES (COGEMA)**
**2, rue Paul Dautier B.P. 4**
**F-78141 Velizy-Villacoublay (FR)**

(72) Inventeur: **De Bourayne, Armand**
**2 Bis rue de la Grande Fontaine**
**F-78430 Louveciennes (FR)**

**Delaire, Louis**
**61 Rue Gros Jacques**
**F-28350 Saint Lubin Des Joncherets (FR)**

(74) Mandataire: **Fort, Jacques**
**CABINET PLASSERAUD 84, rue d'Amsterdam**
**F-75009 Paris (FR)**

(54) Procédé et appareil d'évaluation de la teneur en un métal rare d'une formation géologique naturelle.

(57) Procédé d'évaluation de la teneur en métal rare d'une formation géologique naturelle (6), et appareil mettant en oeuvre ce procédé, dans lequel on émet des neutrons (8) dans la formation géologique, on recueille le rayonnement γ provenant des éléments activés par les neutrons sur un détecteur (13) fournissant des impulsions de sortie représentatives de l'énergie du rayonnement γ reçu, on constitue un histogramme en énergie du rayonnement γ par analyse multi-canaux (14), on recherche dans l'histhogramme les pics d'activation caractéristiques de forte intensité d'au moins un élément de référence à spectre riche associé dans la nature au métal rare recherché ou du métal rare lui-même dans la mesure où il a un spectre riche, on déduit de l'identification des pics dudit élément de référence et de leur intensité le rendement de comptage des impulsions en fonction de l'énergie, on repère l'emplacement d'une ou plusieurs raies dudit métal rare et on recherche audit emplacement la contribution dudit métal rare au taux de comptage.

FIG.1.

EP 0 296 894 A2

Bundesdruckerei Berlin

## Description

### Procédé et appareil d'évaluation de la teneur en un métal rare d'une formation géologique naturelle

La présente invention concerne un procédé d'évaluation de la teneur en métal rare d'une formation géologique naturelle autour d'un trou de forage et un appareil propre à mettre en oeuvre un tel procédé.

Elle trouve une application particulièrement importante, bien que non exclusive, dans le domaine de la recherche de la teneur en or (Au 197) d'un sol lors d'une prospection minière. Mais elle est également applicable à la recherche d'autres métaux rares ou précieux, tels que l'argent ou le platine.

La prospection des métaux précieux est actuellement longue et fastidieuse car elle est réalisée essentiellement par analyse chimique ou par lavage de carottes prélevées in situ dans les couches géologiques supposées riches en matériau recherché.

L'invention vise à fournir un procédé et un appareil répondant mieux que ceux antérieurement connus aux exigences de la pratique, notamment en ce qu'ils permettent de déterminer la teneur en métal rare d'une formation géologique naturelle en temps réel de façon fiable et sans recourir à une manutention importante.

Dans ce but, l'invention propose notamment un procédé d'évaluation de la teneur en un métal rare d'une formation géologique naturelle autour d'un trou de forage, caractérisé en ce que

on émet des neutrons depuis l'intérieur du trou vers la formation géologique pour activer les éléments présents dans la formation,

on recueille le rayonnement $\gamma$ provenant des éléments activés dans la formation sur un détecteur fournissant des impulsions de sortie représentatives de l'énergie du rayonnement $\gamma$ reçu,

on constitue un histogramme en énergie du rayonnement $\gamma$ par analyse multi-canaux,

on recherche dans l'histogramme les pics d'activation caractéristiques de forte intensité d'au moins un élément de référence à spectre riche associé dans la nature au métal rare recherché, ou du métal rare lui-même dans la mesure où il a un spectre riche,

on déduit de l'identification des pics dudit élément de référence ou du métal rare lui-même et de leur intensité le rendement de comptage des impulsions en fonction de l'énergie et

ayant repéré l'emplacement d'une ou plusieurs raies caractéristiques dudit métal rare dans l'histogramme obtenu, on recherche audit emplacement la contribution dudit métal rare au taux de comptage, une étape préalable d'étalonnage du détecteur ayant été réalisée à partir de la détection du rayonnement d'activation provenant d'un matériau ayant une teneur connue dudit métal rare recherché, bombardé dans des conditions expérimentales proches des conditions de mesure in situ.

Dans un procédé avantageux selon l'invention, on constitue l'histogramme en énergie du rayonnement $\gamma$ provenant des éléments activés en effectuant une analyse multi-canaux du rayonnement $\gamma$ recueilli

avec une largeur de canal inférieure ou égale à 3 keV.

On a également avantageusement recours aux dispositions suivantes :

- le métal rare recherché étant l'or et la raie caractéristique de l'or activé étant 412 keV, l'élément de référence est choisi parmi le tellure, l'argent, le zinc, le palladium, le plomb, le bismuth, le tungstene, le manganèse, et l'arsenic.

- l'intensité du flux d'émission neutronique est modulée pendant les mesures en tenant compte du métal rare recherché et des conditions physiques de la formation géologique prélablement déterminées, telles que l'hygrométrie (ou encore taux d'humidité relative) ou la densité, et on sélectionne les doses d'irradiation, le retard avant détection et la durée de détection afin d'obtenir des mesures optimales.

L'invention propose également un appareil de détection et d'évaluation de la teneur en métal rare d'une formation géologique naturelle permettant de mettre en oeuvre le procédé ci-dessus, caractérisé en ce qu'il comporte, dans une unité déplaçable dans un trou de sonde,

- un générateur de neutrons, actionnable par télécommande,

- un détecteur de rayonnement $\gamma$ fournissant des impulsions de sortie représentatives de l'énergie des rayonnements $\gamma$ provenant des éléments activés dans la formation,

- un analyseur multi-canaux à haute résolution en énergie connecté au détecteur et propre à fournir un histogramme du spectre d'énergie détecté,

et des moyens de calcul réalisés pour rechercher dans l'histogramme plusieurs pics d'activation caractéristiques présentant une répartition prédéterminée (correspondant à au moins un élément de référence à spectre riche associé dans la nature au métal rare recherché ou correspondant au métal rare lui même dans la mesure où il a un spectre riche), déduire de l'identification desdits pics et de leur intensité le rendement de comptage des impulsions en fonction de l'énergie et, à partir d'au moins une raie caractéristique dudit métal rare dans l'histogramme obtenu, calculer la contribution dudit métal rare au taux de comptage et restituer une information correspondante.

Dans des modes de réalisation avantageux, on a recours en outre à l'une et/ou à l'autre des dispositions suivantes :

- le détecteur de rayonnement $\gamma$ est un détecteur à semi-conducteur, avantageusement au germanium,

- l'analyseur multi-canaux a un nombre de canaux tel que la longueur élémentaire de chaque canal, dans l'ensemble du spectre, est adaptée à la résolution du détecteur de façon à obtenir un très grand nombre de points,

- l'émetteur de neutrons est alimenté par une source très haute tension (THT) intégrée dans un boitier contenant l'émetteur.

L'invention sera mieux comprise à la lecture de la description qui suit d'un mode particulier de réalisation donné à titre d'exemple non limitatif. La description se réfère aux dessins qui l'accompagnent dans lesquels :

- la Figure 1 est un schéma montrant sous forme de blocs les différentes éléments d'un appareil propre à mettre en oeuvre le procédé selon l'invention,

- la Figure 2 est un exemple d'histogramme du type de ceux obtenus avec le procédé de l'invention.

- la figure 3 montre schématiquement un appareil selon l'invention dans un trou de forage.

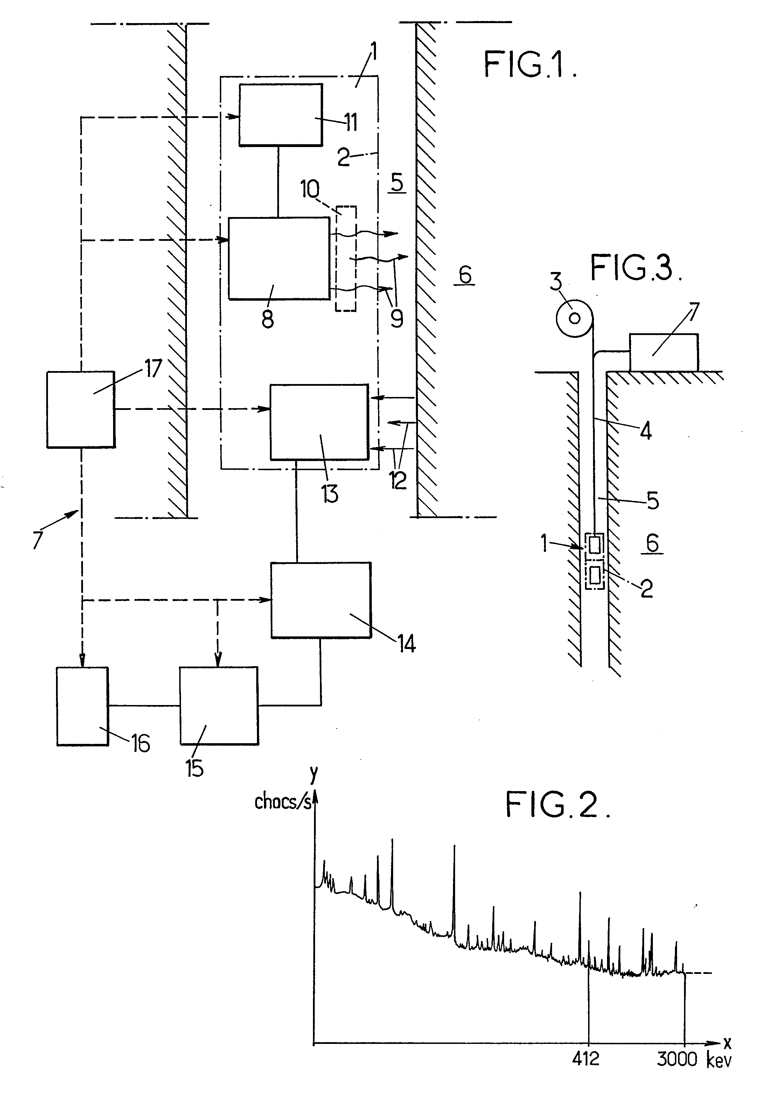

L'appareil utilisé dans la présente invention est tout d'abord décrit en se référant aux figures 1 et 3 qui le représentent schématiquement.

Il comprend un module 1 muni d'un boîtier 2 représenté en trait mixte sur les figures.

Le module 1 est introduit puis maintenu en place par des moyens appropriés, par exemple un treuil 3, un câble 4 et des moyens de centrage (non représentés) pour éviter les mouvements pendulaires, dans un trou 5 de la couche géologique naturelle 6 que l'on veut étudier. Le trou 5 est par exemple un trou de forage percé dans le sol prospecté.

L'appareil comprend par ailleurs un dispositif 7 d'analyse, de calcul et de commande situé en surface.

Le module contient un générateur 8 de neutrons rapides comportant une source, par exemple au deuterium ou au tritium, propre à émettre vers la couche géologique un flux 9 intense de neutrons rapides, par exemple de l'ordre de $10^8$ n/s avec des énergies de 12 à 14 MeV. Les neutrons rapides émis se thermalisent dans le sol 6 et activent une partie des éléments présents dans un volume de plusieurs dizaines de centimètres cubes aux alentours du trou et dans la zone bombardée. On peut avantageusement ralentir les neutrons pour décaler leur spectre vers le domaine thermique en interposant un écran en paraffine 10 ou en graphite entre la source et ladite zone. Le générateur de neutrons rapides est alimenté par des moyens 11 propres à fournir la très haute tension nécessaire à son fonctionnement (supérieure à 100 kV). Afin de minimiser la longueur des câbles de liaison, on peut avantageusement incorporer ces moyens au boîtier 2 du générateur.

Les éléments activés qui constituent des isotopes instables radioactifs, se désintègrent ensuite progressivement pour revenir à l'état stable en émettant notamment des rayons γ (repérés 12 sur la figure 1).

Ces rayons γ provenant du sol 6 sont recueillis par un détecteur 13 qui fait partie du module 1 et est situé à proximité du générateur 8. Ce détecteur 13 fournit des impulsions de sortie représentatives de l'énergie du rayonnement γ reçu et dans une plage allant de quelques keV à quelques MeV.

On utilise avantageusement un détecteur à semi-conducteur, par exemple au germanium ou au silicium dopé au lithium.

Une excellente résolution en spectrométrie X et γ dans un domaine d'énergie de quelques dizaines de KeV à environ 10 MeV est obtenue avec ce type de détecteur qui présente de plus l'avantage d'un faible encombrement (quelques dizaines de centimètres cubes de volume). Le détecteur est muni d'un cryostat (non représenté) permettant de refroidir le semi-conducteur.

Le dispositif 7 situé en surface comprend un analyseur multi-canaux 14 à haute résolution en énergie et connecté au détecteur 13 par un conducteur faisant par exemple corps avec le câble 4.

Les impulsions de sortie du détecteur sont transmises à l'analyseur multi-canaux 14 à haute résolution en énergie. Il est souhaitable que l'analyseur ait une largeur de canal inférieure à 3 keV, ce qui permet un grand nombre de canaux. Il fournit un histogramme en énergie du rayonnement γ reçu du type de celui représenté sur la figure 2.

L'analyseur 14 est raccordé à des moyens 15 de comparaison et de calcul.

L'étude des valeurs obtenues est effectuée par ces moyens 15 donnant in fine la teneur en métal recherché ou une valeur représentative de cette valeur selon le procédé de l'invention, qui sera détaillé plus loin.

Le dispositif 7 comprend enfin des moyens 16 de restitution ou de visualisation qui permettent d'obtenir un résultat en temps réel et in situ et des moyens 17 avantageusement programmables, d'alimentation, de contrôle et de commande de l'appareil selon l'invention. Ces moyens comprennent notamment une télécommande du générateur de neutrons ce qui, entre autre, autorise la modulation de l'intensité du flux de neutrons pendant les mesures. On peut ainsi optimiser entre elles les durées d'irradiation et de détection en fonction du métal recherché (en tenant compte des périodes de ses produits d'activation notamment..) et des conditions physiques (hygrométrie, densité, etc..) de la formation géologique. Les mesures effectuées sont ainsi rendues quantitativement plus significatives.

Les moyens 15, 16, et 17 sont constitués de façon connue en soi.

A titre d'exemple non limitatif, il est donné ci-après un déroulement possible du fonctionnement de l'appareil descendu dans un trou de sonde pour évaluer la teneur en or d'une couche géologique à plusieurs profondeurs. Pour la détermination des valeurs numériques il doit être tenu compte de la demi-période de l'Au 198 qui est de 2,8 jours. L'appareil est descendu à une première profondeur et émet pendant un premier temps prédéterminé ; il est ensuite descendu à une deuxième profondeur et émet pendant un deuxième temps prédéterminé et ainsi de suite. Une fois le sol activé en différents points pendant des temps connus, l'appareil est ensuite remonté par palier, fonctionnant cette fois uniquement en détecteur. Il est placé aux points d'émissions neutroniques de la descente, pendant des temps préalablement optimisés et après des laps de temps de décroissance des couches activées choisis pour obtenir des résultats significatifs avec des mesures s'étendant sur des périodes raisonnablement courtes dans le temps pour être compatibles avec des opérations in situ.

Un autre mode de fonctionnement consiste à descendre l'appareil en un mouvement continu en augmentant l'intensité du flux neutronique au fur et à mesure de la descente. La remontée pourra par contre se faire par palier en détection seulement.

L'identification du métal rare recherché est plus précisément décrite ci-après.

A partir de l'histogramme et en temps réel, on recherche d'abord les pics d'activation d'un ou plusieurs éléments de référence à spectre riche associés dans la nature au métal rare recherché ou du métal rare lui-même dans la mesure où son produit d'activation est à spectre riche.

L'élément de référence ou le métal rare lui-même devra si possible et avantageusement répondre aux trois critères suivants :
- présence de plusieurs pics de l'élément activé dans une plage d'énergie assez large,
- intensité de ces pics et isolement de ces pics dans le spectre, ce qui permet de les différencier relativement facilement du bruit de fond dû notamment aux photons Compton.
- présence de ces pics à proximité des pics de l'élément que l'on cherche à identifier si nécessaire.

L'identification des pics du ou des éléments de référence ou du métal rare activé lui-même permet de calibrer l'axe de l'histogramme sur lequel sont reportés les énergies des pics d'activation de l'ensemble des rayonnements reçus par le détecteur. (axe des x sur la figure 2).

On relève alors l'emplacement d'une ou plusieurs des raies caractéristiques du métal rare recherché. A titre d'exemple, la raie caractéristique de l'isotope activé Au 198 de l'or naturel Au 197 est située aux alentours de 412 Kev. Le spectre de l'or activé étant pauvre, on peut par exemple se reporter et utiliser avantageusement les éléments de référence (et leurs pics d'activation) suivants : Mn 56 (846 Kev, 1810 Kev, 2110 Kev), Ag 110 m (657 Kev), Ag 108 m (434 Kev), As 75 (558 Kev), As 76 (666 Kev)...

Une fois la raie du métal rare identifiée, il reste à apprécier quantitativement le nombre d'impulsions engendrées par l'isotope instable lors de sa décroissance pour déduire la teneur en métal rare de la couche géologique. Ceci s'effectue grâce à un calibrage au préalable de l'axe des y de l'histogramme, donnant par exemple des chocs par seconde, par étalonnage du détecteur.

Pour une quantité connue de neutrons rapides émis dans le sol, la quantité de photons reçue en retour, pour une raie donnée, va dépendre de trois paramètres :
- l'absorption due au milieu,
- l'efficacité du détecteur qui varie avec l'énergie des photons,
- le "pouvoir de vision" du détecteur dans le trou de forage qui permet de prendre en compte les facteurs dépendants de la géométrie existant entre le détecteur et le matériau.

La détermination de ces trois paramètres qu'il fallait d'abord clairement identifier est nécessaire pour mettre en oeuvre l'appareil et le procédé de la présente invention. Or l'absorption de photons d'activation due au milieu est un paramètre qui est toujours apparu comme impossible à déterminer de façon simple lors de la réalisation de mesure in situ.

De façon neuve et inventive, l'inventeur a eu l'idée de déduire simplement cette absorption à partir du spectre pur de l'élément de référence auquel on compare le spectre dégradé du même élément obtenu sur l'histogramme. Ce faisant, l'invention a grandement facilité la détermination in situ d'une absorption jusqu'alors difficilement appréciable. Les valeurs respectives de chaque raie du spectre devant être proportionnelles à celles du spectre pur, on en déduit l'absorption due au milieu pour les différentes énergies concernées, en particulier pour celles de la ou des raies de l'élément rare recherché ou de celles encadrant ou à proximité d'une raie caractéristique de celui-ci et ensuite par extrapolation celle de cette dernière.

On connait par ailleurs l'efficacité du détecteur qui est déterminée lors d'un étalonnage préalable de l'appareil. Elle varie en fonction des énergies reçues et a été introduite initialement, par exemple, dans le calculateur.

Dans ces conditions, le calibrage de l'appareil se réduit à la détermination d'un paramètre ou coefficient unique qui résume le "pouvoir de vision" du détecteur dans le trou de forage.

Ce coefficient unique est obtenu en mesurant, dans des conditions expérimentales aussi réelles que possible, un matériau de teneur connue en métal rare recherché.

Comme il va de soi, et comme il en résulte de ce qui précède, la présente invention ne se limite nullement à ceux de ces modes d'application et de réalisation qui ont été plus spécialement envisagés. Notamment elle peut être utilisée pour déterminer la teneur en tout autre type de métal rare que l'or, l'argent ou le platine et que l'on rencontre dans la nature.

**Revendications**

1. Procédé d'évaluation de la teneur en un métal rare d'une formation géologique naturelle (6) autour d'un trou (5) de forage selon lequel on émet des neutrons depuis l'intérieur du trou (5) vers la formation géologique (6) pour activer les éléments présents dans la formation et on recueille le rayonnement γ (12) provenant des éléments activés dans la formation sur un détecteur (13) fournissant des impulsions de sortie représentatives de l'énergie du rayonnement γ reçu afin de constituer un histogramme en énergie du rayonnement γ par analyse multicanaux,

caractérisé e ce qu'on émet des neutrons rapides en commandant l'émission à distance,

en ce qu'on recherche dans l'histogramme les pics d'activation caractéristiques de forte intensité d'au moins un élément de référence à spectre riche associé dans la nature au métal rare recherché,

en ce qu'on déduit de l'identification des pics dudit élément de référence et de leur itensité le rendement de comptage des impulsions en fonction de l'énergie, et

en ce qu'ayant repéré l'emplacement d'une ou plusieurs raies caractéristiques dudit métal rare dans l'histogramme obtenu, on recherche audit emplacement la contribution dudit métal rare au taux de comptage, une étape préalable d'étalonnage du détecteur (13) ayant été réalisée à partir de la détection du rayonnement d'activation provenant d'un matériau ayant une teneur connue dudit métal rare recherché bombardé dans des conditions expérimentales proches des conditions de mesure in situ.

2. Procédé selon la revendication 1, caractérisé en ce qu'on constitue l'histogramme en énergie du rayonnement γ provenant des éléments activés en effectuant une analyse multi-canaux du rayonnement γ recueilli, avec une largeur de canal inférieure ou égale à 3 keV.

3. Procédé selon l'une quelconque des revendications précédentes, caractérisé en ce que le métal rare recherché étant l'or et la raie caractéristique de l'or, de l'ordre de 412 keV, l'élément de référence est choisi parmi le tellure, l'argent, le zinc, le palladium, le plomb, le bismuth, le tungstène, le manganèse et l'arsenic.

4. Procédé selon l'une quelconque des revendications précédentes, caractérisé en ce qu'on module l'intensité du flux d'émission neutronique pendant les mesures en tenant compte du métal rare recherché et des conditions physiques de la formation géologique préalablement déterminée et on sélectionne les doses d'irradiation, le retard avant détection et la durée de détection afin d'obtenir des mesures optimales.

5. Appareil de détection et d'évaluation de la teneur en métal rare d'une formation géologique naturelle (6) comportant dans une unité déplaçable dans un trou (5) de sonde,
- un générateur (8) de neutrons (9),
- un détecteur (13) de rayonnement γ (12) fournissant des impulsions de sortie représentatives de l'énergie des rayonnements γ provenant des éléments activés dans la formation, et par ailleurs
- un analyseur (14) multicanaux à haute résolution en énergie connecté au détecteur (13) et propre à fournir un histogramme du spectre d'énergie détecté,
caractérisé en ce que le générateur 8 est un générateur de neutrons rapides, actionnable par télécommande, et en ce que l'appareil comporte de plus des moyens (15, 16, 17) de calculs réalisés pour rechercher dans l'histogramme plusieurs pics d'activation caractéristiques présentant une répartition prédéterminée correspondant à au moins un élément de référence à spectre riche associé dans la nature au métal rare recherché, déduire de l'identification des dits pics et de leur intensité le rendement de comptage des impulsions en fonction de l'énergie et à partir d'au moins une raie caractéristique dudit métal rare dans l'histogramme obtenu, calculer la contribution dudit métal rare au taux de comptage et restituer une information correspondante.

6. Appareil selon la revendication 5, caractérisé en ce que le détecteur (13) de rayonnement γ est un détecteur à semi-conducteur avantageusement au germanium.

7. Appareil selon l'une quelconque des revendications 5 et 6, caractérisé en ce que l'analyseur (14) multicanaux a un nombre de canaux tel que la longueur élémentaire de chaque canal, dans l'ensemble du spectre, est adapté à la haute résolution du détecteur.

8. Appareil selon l'une quelconque des revendications 5, 6 et 7, caractérisé en ce que l'émetteur (8) de neutrons (9) est alimenté par une source (11) très haute tension placée dans un boîtier (2) contenant l'émetteur.

0296894

FIG.1.

FIG.3.

FIG.2.